# EUROPEAN PATENT APPLICATION

(11) **EP 3 369 715 A1**
(43) Date of publication of application: **05.09.2018**
(21) Application number: 16859355.6
(22) Date of filing: 12.07.2016
(51) Int. Cl.: C03B 33/095, B23K 26/53, B28D 5/00

(54) **METHOD AND DEVICE FOR CUTTING TUBULAR GLASS, AND METHOD FOR MANUFACTURING TUBULAR GLASS**

(30) Priority: 30.10.2015 JP 2015214453
(71) Applicant: Nippon Electric Glass Co., Ltd., Otsu-shi, Shiga 520-8639 (JP)
(72) Inventor: WADA Masanori, Otsu-shi Shiga 520-8639 (JP); IWASAKI Takanori, Otsu-shi Shiga 520-8639 (JP)
(74) Representative: Tetzner, Michael
(86) International application number: PCT/JP2016/070581
(87) International publication number: WO 2017/073118

(57) **Abstract**

Provided is a cutting method for a tube glass, including: a heating step of heating a preset cut portion (CP) of the tube glass (G2) by radiating laser light (L11) to the preset cut portion (CP) ; an inner crack region forming step of forming an inner crack region (C1) including one or a plurality of cracks through multiphoton absorption that occurs in an irradiation region of laser light (L12) by radiating the laser light (L12) having a focal point adjusted to an inside of the preset cut portion (CP); and a cooling step of cooling the preset cut portion (CP), to thereby cause the cracks to propagate in the inside of the preset cut portion (CP).

## Description

### Technical Field

The present invention relates to a cutting method for a tube glass, a cutting device for a tube glass, and a manufacturing method for a tube glass product.

### Background Art

A tube glass product used in, for example, a medical ampule, a medical syringe, and a fluorescent tube for lighting is formed by various methods such as a Danner method and a down-draw method. Description is made of the overview of the Danner method below as an example.

When a tube glass product is manufactured by the Danner method, molten glass is first supplied to a rotatable sleeve arranged in a muffle furnace. The supplied molten glass is formed into a tube shape while being wound on an inside of the sleeve. The molten glass formed into a tube shape is pulled out from a distal end of the sleeve by a tube drawing device (pulling device) to form a tube glass continuously (for example, see Patent Literature 1).

The tube glass having been continuously formed (hereinafter referred to as "continuous tube glass") is subjected to steps of rough cutting and re-cutting to be formed into a tube glass product having a predetermined length. In the rough cutting step, the continuous tube glass that is conveyed is cut by a rough cutting device to obtain a tube glass having a predetermined length (for example, see paragraph [0003] of Patent Literature 2).

In the re-cutting step, the tube glass having been obtained through the rough cutting step is conveyed by a conveyor while being rotated, and preset cut portions of the tube glass are heated by a burner. Next, while the tube glass is rotated, scratches are formed at the heated portions by a cutting blade such as a diamond wheel of a re-cutting device. Specifically, the cutting blade is brought into contact with the tube glass under a state in which the cutting blade is cooled by water or the like, and thermal shock resulting therefrom causes cracks having an origin at the scratches to be formed on an outer surface of the tube glass . Both end portions of the tube glass are cut by propagation of the cracks. After that, the end portions of the tube glass are finished by mouth-burning processing. With the steps described above, a tube glass product having a predetermined length is completed (see paragraph [0005] of Patent Literature 2).

### Citation List

Patent Literature 1: JP 2013-159532 A
Patent Literature 2: JP 2013-147405 A

### Summary of Invention

### Technical Problem

In the above-mentioned re-cutting step, the scratches are formed on the outer surface of the tube glass by the cutting blade, and the thermal shock causes the scratches to propagate as cracks, to thereby cut the tube glass. Therefore, a cutting accuracy for a fracture surface is low, and long time is required for the mouth-burning processing for finishing the fracture surface, resulting in degradation of production efficiency. Further, in the method involving forming the scratches on the outer peripheral surface of the tube glass, glass powder is inevitably generated. Thus, a step of cleaning the inner surface of the tube glass to which the glass powder adheres is also separately required after the cutting.

The present invention has been made in view of the above-mentioned circumstances, and has an object to provide a cutting method and a cutting device as well as a manufacturing method for a tube glass product, which are capable of efficiently cutting a tube glass by preventing generation of glass fine powder.

### Solution to Problem

In order to solve the above-mentioned problem, according to one embodiment of the present invention, there is provided a cutting method for a tube glass, comprising: a heating step of heating a preset cut portion of the tube glass by radiating laser light to the preset cut portion; an inner crack region forming step of forming an inner crack region including one or a plurality of cracks through multiphoton absorption that occurs in an irradiation region of laser light by radiating the laser light having a focal point adjusted to an inside of the preset cut portion; and a cooling step of cooling the preset cut portion, to thereby cause the cracks to propagate in the inside of the preset cut portion.

According to the cutting method having the above-mentioned configuration, after the preset cut portion of the tube glass is heated by radiating the laser light to the preset cut portion in the heating step, the laser light having a focal point adjusted to the inside of the preset cut portion is radiated in the inner crack region forming step, thereby being capable of forming the inner crack region including the cracks as an origin at the irradiation part of the laser light through multiphoton absorption. After that, the preset cut portion is cooled in the cooling step, thereby causing thermal shock. The thermal shock causes the cracks to propagate throughout the entirety of the inside of the preset cut portion, thereby cutting the tube glass . The inner crack forming region is generated in the inside of the tube glass. Therefore, unlike the related-art method, the tube glass can be cut even without formation of the scratches on the outer surface of the tube glass in a non-contact state. Thus, circumstances of related arts such as generation of glass powder at the time of cutting the tube glass can be reliably prevented. With this, the labor of removing the glass powder by cleaning can be omitted, thereby being capable of reducing the number of required steps. Further, when the cut surface is formed as described above, as compared to the case in which the crack is forcibly generated and caused to propagate by cleaving or the like, the occurrence of cracking, chipping, and the like can be prevented to the extent possible to control the properties of the cut surface with relatively high accuracy, with the result that the satisfactory cut surface can be obtained stably. Thus, occurrence of defects caused by cracking and chipping can be prevented, and time required for mouth-burning processing for end portions of the tube glass can be significantly shortened, thereby being capable of efficiently manufacturing a tube glass product.

Further, in the cutting method for a tube glass according to the present invention, it is desired that the heating step be performed while rotating the tube glass. With this, substantially the entire circumference of the preset cut portion of the tube glass can be evenly heated.

Similarly, it is desired that the inner crack region forming step be performed while rotating the tube glass. With this, the inner crack region can be formed in a wider range in the inside of the tube glass at the preset cut portion.

Further, it is desired that the cooling step be performed while rotating the tube glass. With this, the preset cut portion of the tube glass can be cooled in a wider range, thereby being capable of suitably causing the cracks to propagate in the inside of the preset cut portion.

Further, it is desired that, in the cooling step, the preset cut portion be cooled by a gaseous or mist-like cooling medium. In such a manner, unlike the related art, the tube glass can be cut without causing a foreign matter to remain on a cut surface and without involving mechanical contact with a cutting blade.

Further, in the cutting method for a tube glass according to the present invention, it is desired that the laser light used in the inner crack region forming step comprise a pulse laser. With this, the multiphoton absorption phenomenon can be caused effectively in the inside of the preset cut portion.

In order to solve the above-mentioned problem, according to one embodiment of the present invention, there is provided a cutting device for a tube glass, comprising: a heating device configured to heat a preset cut portion of the tube glass by radiating laser light to the preset cut portion; an inner crack region forming device configured to form an inner crack region including one or a plurality of cracks through multiphoton absorption that occurs in an irradiation region of laser light by radiating the laser light having a focal point adjusted to an inside of the preset cut portion; and a cooling device configured to cool the preset cut portion, to thereby cause the cracks to propagate in the inside of the preset cut portion.

According to the cutting device having the above-mentioned configuration, after the preset cut portion of the tube glass is heated by radiating the laser light to the preset cut portion by the heating device, the laser light having a focal point adjusted to the inside of the preset cut portion is radiated by the inner crack region forming device, thereby being capable of forming the inner crack region including the cracks as an origin at the irradiation part of the laser light through multiphoton absorption. After that, the preset cut portion is cooled by the cooling device, thereby causing thermal shock. The thermal shock causes the cracks to propagate throughout the entirety of the inside of the preset cut portion, thereby cutting the tube glass . The inner crack region is generated in the inside of the tube glass . Therefore, unlike the related-art method, the tube glass can be cut even without formation of the scratches on the outer surface of the tube glass in a non-contact state. Thus, circumstances of related arts such as generation of glass powder at the time of cutting the tube glass can be reliably prevented. With this, the labor of removing the glass powder by cleaning can be omitted, thereby being capable of reducing the number of required steps . Further, when the cut surface is formed as described above, as compared to the case in which the crack is forcibly generated and caused to propagate by cleaving or the like, the occurrence of cracking, chipping, and the like can be prevented to the extent possible to control the properties of the cut surface with relatively high accuracy, with the result that the satisfactory cut surface can be obtained stably. Thus, the occurrence of defects caused by cracking and chipping can be prevented, and the time required for the mouth-burning processing for the end portions of the tube glass can be significantly shortened, thereby being capable of efficiently manufacturing the tube glass product.

Further, it is desired that the cutting device for a tube glass according to the present invention further comprise a rotational drive device which is configured to rotate the tube glass . With this, when the preset cut portion of the tube glass is to be heated by the heating device, when the cracks are to be formed in the inside of the preset cut portion by the inner crack region forming device, or when the preset cut portion is to be cooled by the cooling device, the cutting device is capable of performing those processes while rotating the tube glass. With this, the preset cut portion can be evenly heated, and the inner crack region can be formed and cooled in a wide range, thereby being capable of cutting the tube glass with high accuracy.

It is desired that the laser light used in the inner crack region forming device comprise a pulse laser. With this, the multiphoton absorption phenomenon can be caused effectively in the inside of the preset cut portion.

In order to solve the above-mentioned problem, according to one embodiment of the present invention, there is provided a manufacturing method for a tube glass product, comprising: a first cutting step of cutting a continuous tube glass formed by tube drawing; and a second cutting step of cutting an end portion of the tube glass formed after the first cutting step, the second cutting step comprising: a heating step of heating a preset cut portion at an end portion of the tube glass by radiating laser light to the preset cut portion; an inner crack region forming step of forming an inner crack region including one or a plurality of cracks through multiphoton absorption that occurs in an irradiation region of laser light by radiating the laser light having a focal point adjusted to an inside of the preset cut portion; and a cooling step of cooling the preset cut portion, to thereby cause the cracks to propagate in the inside of the preset cut portion.

According to the above-mentioned configuration, after the tube glass is formed by cutting the continuous tube glass in the first cutting step, the end portion of the tube glass is cut in the second cutting step, thereby obtaining a desired tube glass product. In the second cutting step, after the preset cut portion is heated by radiating the laser light to the preset cut portion in the heating step, the inner crack region including the cracks as an origin can be formed at the irradiation part of the laser light through multiphoton absorption in the inner crack region forming step. After that, the preset cut portion is cooled in the cooling step, thereby causing thermal shock. The thermal shock causes the cracks to propagate throughout the entirety of the inside of the preset cut portion, thereby cutting the tube glass . The inner crack region is generated in the inside of the tube glass . Therefore, unlike the related-art method, the tube glass can be cut even without formation of the scratches on the outer surface of the tube glass in a non-contact state. Thus, circumstances of related arts such as generation of glass powder at the time of cutting the tube glass can be reliably prevented. With this, the labor of removing the glass powder by cleaning can be omitted, thereby being capable of reducing the number of required steps . Further, when the cut surface is formed as described above, as compared to the case in which the crack is forcibly generated and caused to propagate by cleaving or the like, the occurrence of cracking, chipping, and the like can be prevented to the extent possible to control the properties of the cut surface with relatively high accuracy, with the result that the satisfactory cut surface can be obtained stably. Thus, the occurrence of defects caused by cracking and chipping can be prevented, and the time required for the mouth-burning processing for the end portions of the tube glass can be significantly shortened, thereby being capable of efficiently manufacturing the tube glass product.

### Advantageous Effects of Invention

According to the present invention, the tube glass can be efficiently cut by preventing generation of glass fine powder.

### Brief Description of Drawings

FIG. 1 is a side view of a manufacturing apparatus for a tube glass product according to a first embodiment of the present invention.
FIG. 2 is a plan view of a first cutting device in the manufacturing apparatus illustrated in FIG. 1.
FIG. 3 is an enlarged perspective view of a main portion of a continuous tube glass, for illustrating a scanning mode of laser light in the first cutting device.
FIG. 4 is an enlarged plan view of a main portion of the continuous tube glass, for illustrating an irradiation mode of the laser light in the first cutting device.
FIG. 5 is a sectional view of a main portion of the continuous tube glass immediately after an inner crack region is formed.
FIG. 6 is a sectional view of a main portion of the continuous tube glass immediately after cracks in the inner crack region start propagating in a circumferential direction of the continuous tube glass.
FIG. 7 is a sectional view of a main portion of the continuous tube glass, for illustrating a state in which the cracks in the inner crack region are in the process of propagating in the circumferential direction of the continuous tube glass.
FIG. 8 is a front view of an end surface of the continuous tube glass, for illustrating a state after the cracks in the inner crack region propagate throughout an entire circumference of the continuous tube glass.
FIG. 9 is a plan view of a main portion of the manufacturing apparatus illustrated in FIG. 1, and is a view for illustrating a state immediately after the continuous tube glass is cut.
FIG. 10 is a side view for schematically illustrating a second cutting device of the manufacturing apparatus illustrated in FIG. 1.
FIG. 11 is a schematic plan view for illustrating the second cutting device.
FIG. 12 is a sectional view for illustrating a procedure of forming the inner crack region in the tube glass.
FIG. 13 is a sectional view for illustrating the procedure of forming the inner crack region in the tube glass.
FIG. 14 is a sectional view for illustrating the procedure of forming the inner crack region in the tube glass.
FIG. 15 is a sectional view for illustrating a procedure of causing the cracks to propagate in the inside of the tube glass.
FIG. 16 is a sectional view for illustrating the procedure of causing the cracks to propagate in the inside of the tube glass.
FIG. 17 is a sectional view for illustrating the procedure of causing the cracks to propagate in the inside of the tube glass.
FIG. 18 is a side view for schematically illustrating a second cutting device according to a second embodiment of the present invention.
FIG. 19 is an enlarged perspective view of a main portion of the continuous tube glass, for illustrating a scanning mode of laser light in the second cutting device.
FIG. 20 is an enlarged perspective view of a main portion of the continuous tube glass, for illustrating another example of the scanning mode of laser light in the second cutting device.
FIG. 21 is a sectional view of a main portion of the tube glass, for illustrating another example of a mode of the inner crack region in the present invention.
FIG. 22 is a sectional view of a main portion of the tube glass, for illustrating another example of the mode of the inner crack region in the present invention.
FIG. 23 is a sectional view of a main portion of the tube glass, for illustrating another example of the mode of the inner crack region in the present invention.

### Description of Embodiments

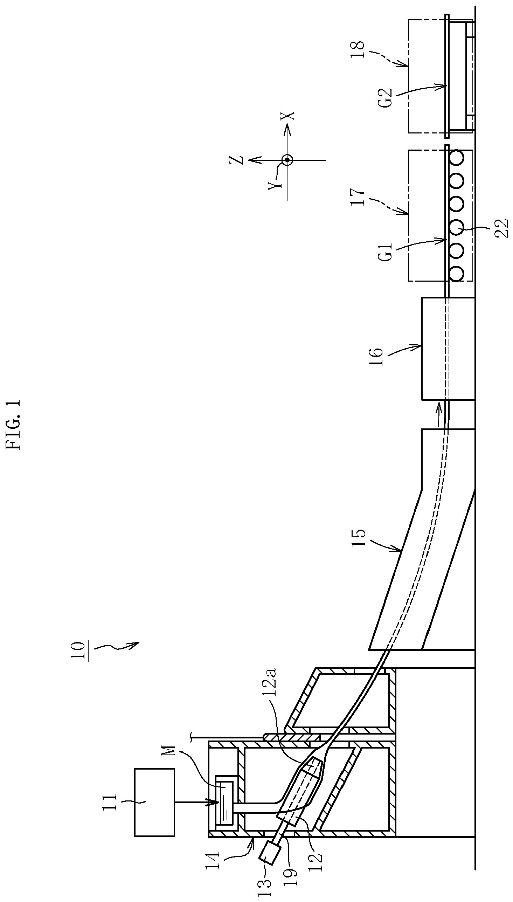

Now, description is made of embodiments of the present invention with reference to the drawings. FIG. 1 to FIG. 17 are illustrations of a cutting method for a tube glass, a cutting device for a tube glass, and a manufacturing method for a tube glass product according to a first embodiment of the present invention.

FIG. 1 is an illustration of one example of a manufacturing apparatus 10 for a tube glass product to which the present invention is applicable. The manufacturing apparatus 10 is configured to form a continuous tube glass G1 by a Danner method, and mainly comprises a glass melting furnace 11, a sleeve 12, a drive device 13, a muffle furnace 14, an annealer 15, a tube drawing device 16, a cutting device (hereinafter referred to as "first cutting device") 17, and a cutting device (hereinafter referred to as "second cutting device") 18. The drive device 13 is configured to drive the sleeve 12 to rotate. The muffle furnace 14 is configured to accommodate the sleeve 12. The tube drawing device 16 is configured to subject the continuous tube glass G1 to tube drawing forming. The first cutting device 17 is configured to cut the continuous tube glass G1. The second cutting device 18 is configured to cut end portions of a tube glass G2 obtained by cutting the continuous tube glass G1.

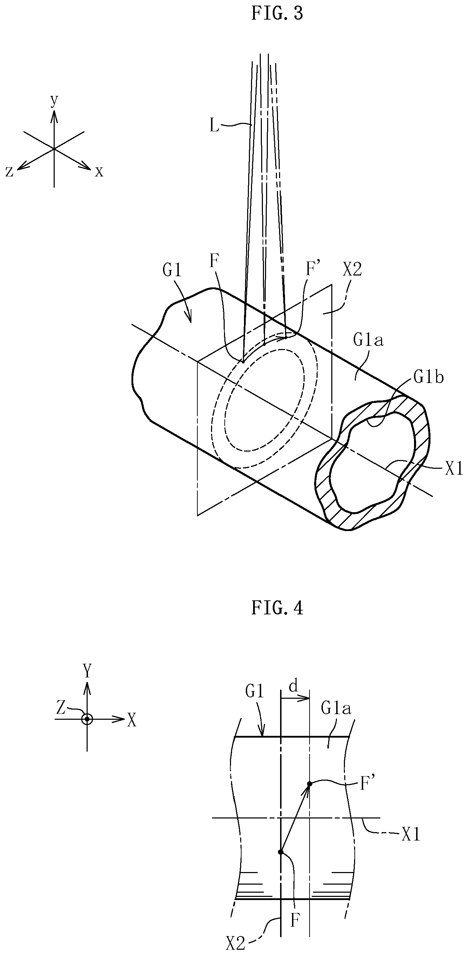

An XYZ coordinate system illustrated in FIG. 1 is a coordinate system on a fixed side. In the first embodiment, a plane including an X-axis and a Y-axis is defined as a horizontal plane, and a direction along a Z-axis is defined as a vertical direction (the positive side of the Z-axis is defined as a top, and the negative side thereof is defined as a bottom) . Further, an xyz coordinate system illustrated in FIG. 3 is a coordinate system on a moving side (coordinate system on the continuous tube glass G1). In the same manner as in the XYZ coordinate system illustrated in, for example, FIG. 1, a plane including an x-axis and a y-axis is defined as a horizontal plane, and a direction along a z-axis is defined as a vertical direction.

The glass melting furnace 11 is configured to melt a glass raw material to generate a molten glass M. The molten glass M generated in the glass melting furnace 11 is supplied to the sleeve 12 in the muffle furnace 14.

The sleeve 12 is formed into a cylindrical shape through use of a refractory. The sleeve 12 is partially tapered, and is arranged so that a small-diameter-side end portion 12a of a tapered portion is directed obliquely downwardly. The sleeve 12 is connected to the drive device 13 through intermediation of a shaft 19. In the first embodiment, when the sleeve 12 is driven to rotate by the drive device 13, the molten glass M supplied to the sleeve 12 can be wound into a cylindrical shape and be pultruded into a tube shape from the small-diameter-side end portion 12a.

As described above, the molten glass M pultruded into a tube shape is continuously pulled out of the muffle furnace 14 as the continuous tube glass G1 and is guided into the annealer 15.

The tube drawing device 16 is arranged on a downstream side of the annealer 15 and is configured to pull the continuous tube glass G1 having passed through the annealer 15 at a constant speed so that the continuous tube glass G1 can be conveyed to the first cutting device 17. Specifically, the continuous tube glass G1 aligned to a predetermined outer diameter can be supplied to the first cutting device 17 by pulling the continuous tube glass G1 in a downstream direction while sandwiching an upper portion and a lower portion of the continuous tube glass G1 between a pair of conveyance belts (not shown), to thereby subject the continuous tube glass G1 to tube drawing.

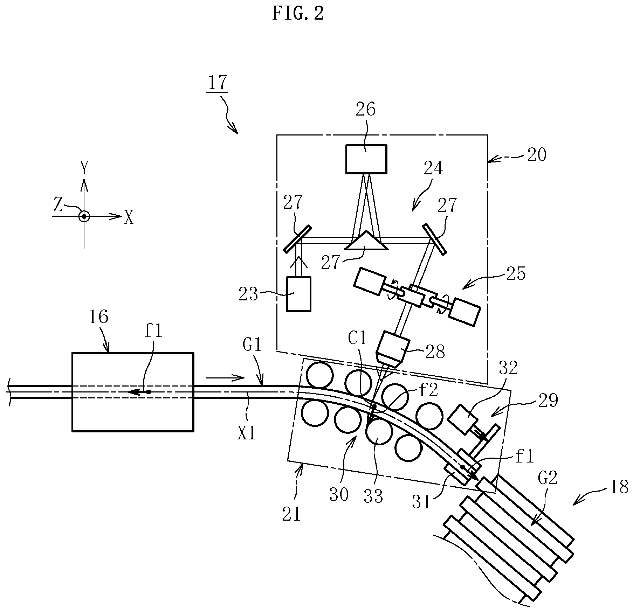

As illustrated in FIG. 2, the first cutting device 17 is configured to cut the continuous tube glass G1 to obtain the tube glass G2 having a predetermined length. The thickness of the tube glass G2 in the first embodiment is set to, for example, from 0.5 mm to 2.0 mm. However, the thickness of the tube glass G2 is not limited thereto. The first cutting device 17 comprises an inner crack region forming device 20, a crack propagation device 21, and support portions 22 (see FIG. 1). The inner crack region forming device 20 is configured to form an inner crack region C1 in a portion of the continuous tube glass G1 in a circumferential direction of the continuous tube glass G1. The crack propagation device 21 is configured to cause cracks in the inner crack region C1 to propagate throughout an entire circumference of the continuous tube glass G1, by generating, in the continuous tube glass G1, a stress that urges propagation of the cracks. The support portions 22 are configured to support the continuous tube glass G1.

The inner crack region forming device 20 comprises a laser oscillator 23 and an optical system 24. The laser oscillator 23 is capable of oscillating predetermined laser light L. The optical system 24 is configured to cause the laser light L oscillated from the laser oscillator 23 to be condensed and enter an inside of the continuous tube glass G1. In addition, in the first embodiment, the inner crack region forming device 20 further comprises a scanning portion 25 and a focal point adjusting portion 26. The scanning portion 25 is arranged on a path of the optical system 24, and is configured to cause the laser light L to perform scanning in a predetermined mode as illustrated in FIG. 2. The focal point adjusting portion 26 is capable of adjusting a position of a focal point F of the laser light L in the inside of the continuous tube glass G1.

The laser oscillator 23 is configured to oscillate, for example, nano-second pulse laser light, pico-second pulse laser light, or sub-pico-second pulse laser light.

In the first embodiment, the optical system 24 comprises a plurality of mirrors 27 and an objective lens 28. The objective lens 28 is configured to condense the laser light L transmitted through the plurality of mirrors 27 into the continuous tube glass G1.

The scanning portion 25 is formed of a Galvano mirror, for example, as illustrated in FIG. 2. The scanning portion 25 is constructed so as to cause the laser light L reflected from the mirrors 27 to perform scanning in a predetermined locus . For example, in the first embodiment, as illustrated in FIG. 3, the scanning portion 25 is constructed so as to cause the laser light L to perform scanning linearly along the circumferential direction of the continuous tube glass G1 in such a manner that the focal point F is included in an imaginary cross section X2 orthogonal to a center line X1 of the continuous tube glass G1.

The scanning locus described above has a form in the case of being viewed in the coordinate system (xyz coordinate system illustrated in FIG. 3) based on the moving continuous tube glass G1. When the scanning locus is viewed in the coordinate system based on the fixed side, as illustrated in FIG. 4, the scanning form of the focal point F is set in the following manner . While the continuous tube glass G1 moves by a predetermined distance d in a direction along the center line X1, the focal point F moves by a distance indicated by the arrow in FIG. 3 in a direction along the circumferential direction and moves by the same distance as the moving distance d of the continuous tube glass G1 in the direction along the center line X1.

The focal point adjusting portion 26 comprises, for example, a spatial light phase modulator. Specifically, with the focal point adjusting portion 26, a spatial phase distribution of the laser light L can be modulated so that the position of the focal point F (more exactly, position in a thickness direction of the continuous tube glass G1) is adjusted with a phase hologram produced in advance in accordance with an irradiation direction of the laser light L controlled by the scanning portion 25. In this embodiment, as illustrated in FIG. 3, the position of the focal point F of the laser light L is adjusted so that the focal point F is positioned along the circumferential direction of the continuous tube glass G1 on an outer periphery side of the continuous tube glass G1 in the thickness direction thereof, that is, on a side closer to an outer surface (outer peripheral surface) G1a of the continuous tube glass G1.

As illustrated in FIG. 2, the crack propagation device 21 comprises a tensile force applying portion 29 and a bending force applying portion 30. The tensile force applying portion 29 is configured to apply a tensile force f1 in the direction along the center line X1 of the continuous tube glass G1. The bending force applying portion 30 is configured to apply a bending force f2 to the continuous tube glass G1 so that the center line X1 of the continuous tube glass G1 is curved at a predetermined curvature.

In this case, for example, the tensile force applying portion 29 comprises a gripping portion 31 and a slide drive portion 32. The gripping portion 31 is configured to grip a downstream-side end portion of the continuous tube glass G1. The slide drive portion 32 is configured to move the gripping portion 31 in the direction along the center line X1. The slide drive portion 32 may be constructed so as to move the gripping portion 31 in synchronization with the continuous tube glass G1. In this case, the state in which the tensile force f1 is applied to the continuous tube glass G1 that is being moved along the center line X1 can be maintained for a certain time period (certain distance).

Further, the bending force applying portion 30 comprises a plurality of rollers 33 configured to sandwich both sides of the continuous tube glass G1 in a horizontal direction thereof. The positions of the continuous tube glass G1 supported (sandwiched) by the plurality of rollers 33 are set so that the center line X1 of the continuous tube glass G1 is curved at a predetermined curvature as the center line X1 is directed to the downstream side.

The support portions 22 may be a plurality of rollers which are arranged at predetermined intervals along a longitudinal direction of the continuous tube glass G1. However, the support portions 22 are not limited thereto . The support portions 22 support the continuous tube glass G1 from below so as to guide the continuous tube glass G1 in the longitudinal direction of the continuous tube glass G1.

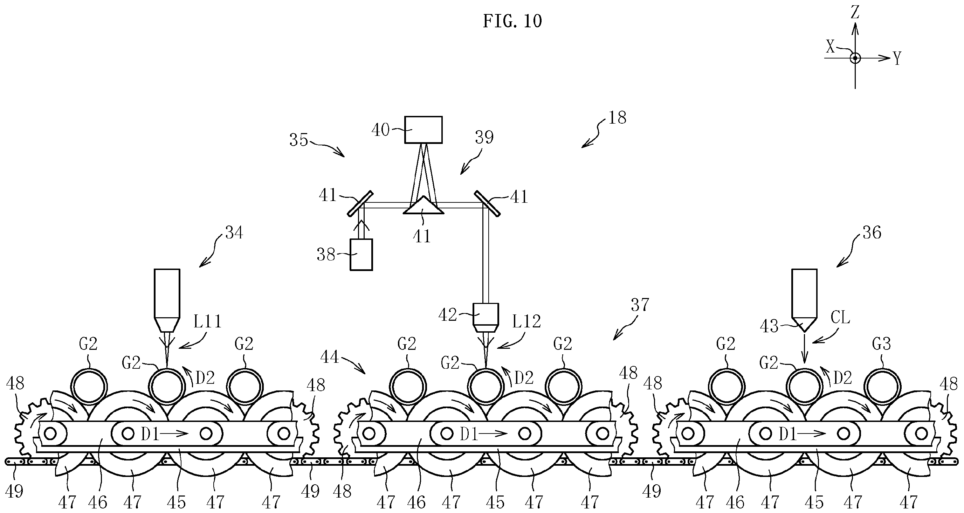

As illustrated in FIG. 10, the second cutting device 18 cuts an end portion of the tube glass G2 that is obtained by cutting the continuous tube glass G1 with use of the first cutting device 17. The second cutting device 18 comprises a heating device 34, an inner crack region forming device 35, a cooling device 36, and a conveyance device 37. The heating device 34 is configured to heat a preset cut portion CP by radiating laser light L11 to the preset cut portion CP at an end portion of the tube glass G2. The inner crack region forming device 35 is configured to form the inner crack region C1 including one or a plurality of cracks in the inside of the tube glass G2. The cooling device 36 is configured to cool the preset cut portion CP of the tube glass G2. The conveyance device 37 is configured to convey the tube glass G2.

The heating device 34 comprises a laser oscillator configured to radiate the laser light L11. In the first embodiment, the heating device 34 may be configured to radiate CO₂ laser light to the tube glass G2 because the CO₂ laser light has a high absorption coefficient with respect to glass and is capable of efficiently heating glass. However, the laser light is not limited to the CO₂ laser light. Further, heating of the tube glass G2 with the laser light L11 enables local heating as compared to a case in which a burner is used. With this, the tube glass G2 can be cut with high accuracy. Further, the heating device 34 may be configured to scan the laser light L11 along the conveyance direction of the tube glass G2, but is not limited thereto.

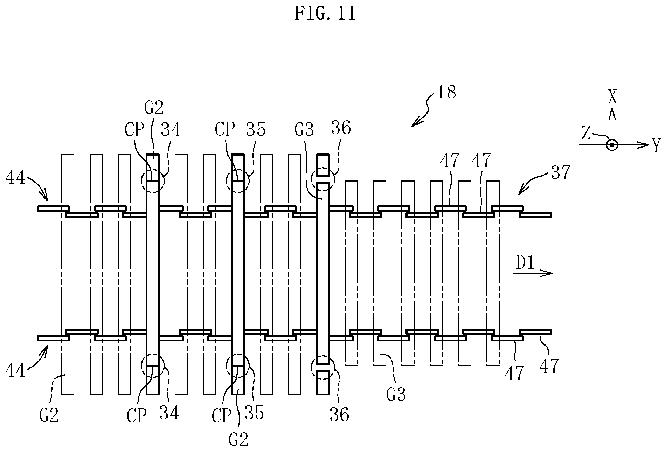

As illustrated in FIG. 10, the inner crack region forming device 35 comprises a laser oscillator 38, an optical system 39, and a focal point adjusting portion 40. The laser oscillator 38 is capable of oscillating predetermined laser light L12. The optical system 39 is configured to cause the laser light L12 oscillated from the laser oscillator 38 to be condensed and enter the inside of the tube glass G2. The focal point adjusting portion 40 is capable of adjusting a position of a focal point of the laser light L12 in the inside of the tube glass G2. Further, as illustrated in FIG. 11, the second cutting device 18 comprises two inner crack region forming devices 35 to re-cut both end portions of the tube glass G2.

The laser oscillator 38 is configured to oscillate, for example, nano-second pulse laser light, pico-second pulse laser light, or sub-pico-second pulse laser light.

The optical system 39 has a configuration which is substantially the same as that of the optical system 24 of the first cutting device 17, and comprises a plurality of mirrors 41 and an objective lens 42. The objective lens 42 is configured to condense the laser light L12 transmitted through the plurality of mirrors 41 into the tube glass G2.

The focal point adjusting portion 40 has a configuration which is substantially the same as that of the focal point adjusting portion 26 of the first cutting device 17, and may comprise, for example, a spatial light phase modulator. Specifically, with the focal point adjusting portion 40, a spatial phase distribution of the laser light L12 can be modulated so that the position of the focal point (more exactly, position in the thickness direction of the tube glass G2) is adjusted with a phase hologram produced in advance in accordance with the irradiation direction of the laser light L12.

As illustrated in FIG. 10, the cooling device 36 comprises a nozzle 43 configured to jet a cooling medium CL toward the preset cut portion CP of the tube glass G2. As the cooling medium CL to be jetted from the nozzle 43, there may be used gas (for example, air or carbon dioxide gas) or a mist-like mixture that is obtained by mixing gas and liquid. The nozzle 43 has a small jet port so that the cooling medium CL can be jetted locally to the preset cut portion CP.

The conveyance device 37 is configured to convey the tube glass G2 in a predetermined direction and also serves as a rotational drive device configured to cause the tube glass G2 to rotate about an axial center thereof (see the center line X1). The conveyance device 37 comprises a pair of endless roller chain composites 44. The conveyance device 37 conveys the tube glass G2, which is placed so as to extend over the pair of roller chain composites 44, in a direction orthogonal to the axial center of the tube glass G2 (lateral direction).

As illustrated in FIG. 10, each roller chain composite 44 comprises a pair of endless roller chains 46, a plurality of disc-shaped conveyance discs 47, sprockets 48, and an endless drive chain 49. The pair of roller chains 46 travel on a guide rail 45. The plurality of conveyance discs 47 are axially supported between the pair of roller chains 46 by roller shafts of the pair of roller chains 46 so as to be freely driven to rotate. The sprockets 48 are coaxially fixed to the respective conveyance discs 47. The drive chain 49 circulates in mesh with all of the sprockets 48.

Each conveyance disc 47 has a diameter which is larger than a pitch of the roller chains 46. The conveyance discs 47 are arranged alternately so that outer peripheral portions of the conveyance discs 47 partially overlap with each other in side view. With this, a trough is formed between the adjacent conveyance discs 47 in side view, and the tube glass G2 is stably placed in the trough. The conveyance device 37 causes the roller chains 46 to be circulated by a drive source (not shown) to allow the conveyance discs 47 to travel, to thereby convey each tube glass G2 in the direction orthogonal to the axial center of the tube glass G2 (tube axis) (see arrow D1 in FIG. 10 and FIG. 11).

Further, the conveyance device 37 causes the drive chains 49 to be circulated by another drive source (not shown) independently of the roller chains 46 to allow the conveyance discs 47 to rotate through the sprockets 48. Through this rotation, the conveyance discs 47 cause each tube glass G2 to rotate about an axial center thereof (see arrow D2 in FIG. 10). With this, the conveyance device 37 is capable of causing the plurality of arrayed tube glasses G2 to continuously rotate about respective axial centers, and continuously conveying the plurality of tube glasses G2 in a direction orthogonal to the respective axial centers with a predetermined pitch.

Now, description is made of a manufacturing method for a tube glass product G3 with use of the manufacturing apparatus 10 having the above-mentioned configuration.

First, as illustrated in FIG. land FIG. 2, the continuous tube glass G1 sent from the tube drawing device 16 is conveyed further to the downstream side while being supported by the support portions 22 of the first cutting device 17 from below. In this case, the first cutting device 17 configured to cut the continuous tube glass G1 to a predetermined length dimension is arranged on a downstream side of the tube drawing device 16, and the first cutting device 17 performs a rough cutting step (first cutting step).

In the rough cutting step, when the downstream-side end portion of the continuous tube glass G1 reaches a predetermined position (or a position immediately before the predetermined position), the downstream-side end portion of the continuous tube glass G1 is gripped by the gripping portion 31, and the gripping portion 31 is moved by the slide drive portion 32 toward the downstream side in the longitudinal direction. With this, the tensile force applying portion 29 applies the tensile force f1 in the direction along the center line X1 to the continuous tube glass G1.

Further, the plurality of rollers 33 forming the bending force applying portion 30 are arranged on an upstream side of the gripping portion 31. The predetermined bending force f2 is applied to the continuous tube glass G1 having passed between the plurality of rollers 33 so that the center line X1 is curved at a predetermined curvature. In the first embodiment, the continuous tube glass G1 is curved at a predetermined curvature so that the irradiation side (upper right side of FIG. 2) of the laser light L described later becomes convex. With this, in the above-mentioned state, the tensile stress in directions separated from each other along the center line X1 is generated throughout the entire circumference of the continuous tube glass G1. In particular, on a large-diameter side of the curved portion of the continuous tube glass G1, the tensile stress in the directions separated from each other along the center line X1 is dominantly distributed.

Then, the inside of the continuous tube glass G1 is irradiated with the laser light L under a state in which the above-mentioned stress distribution is maintained. In this case, the inner crack region C1 including one or a plurality of cracks is formed through multiphoton absorption of the laser light L in the region irradiated with the laser light L by adjusting the irradiation condition (for example, a pulse width and an output) of the laser light L.

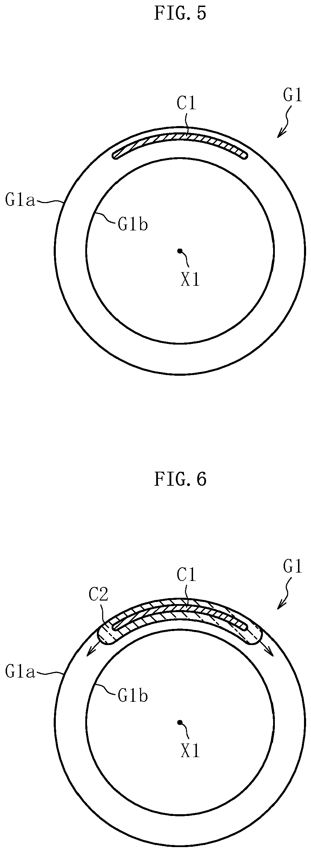

Further, in this case, the scanning portion 25 causes the laser light L to perform scanning in a predetermined locus (for example, a region from the focal point F to a focal point F' of FIG. 3), and the position of the focal point F of the laser light L is adjusted to be changed with the passage of time by the focal point adjusting portion 26. With this, the focal point F is moved along the circumferential direction at a predetermined position of the continuous tube glass G1 in the thickness direction thereof, to thereby form the inner crack region C1 having a predetermined circumferential dimension (see FIG. 5). In the example illustrated in FIG. 5, the inner crack region C1 having a band shape is formed around the center line X1 within a range of 45° or more and less than 90°.

The cracks in the inner crack region C1 are caused to propagate in the circumferential direction to cut the continuous tube glass G1. In this embodiment, the predetermined stress is generated in the inside of the continuous tube glass G1 at a time of irradiation with the laser light L. Therefore, when the inner crack region C1 is formed as described above, the cracks naturally propagate in directions separated from each other along the circumferential direction from both circumferential end portions of the inner crack region C1, and a crack propagation region C2 is enlarged along the circumferential direction (see FIG. 6).

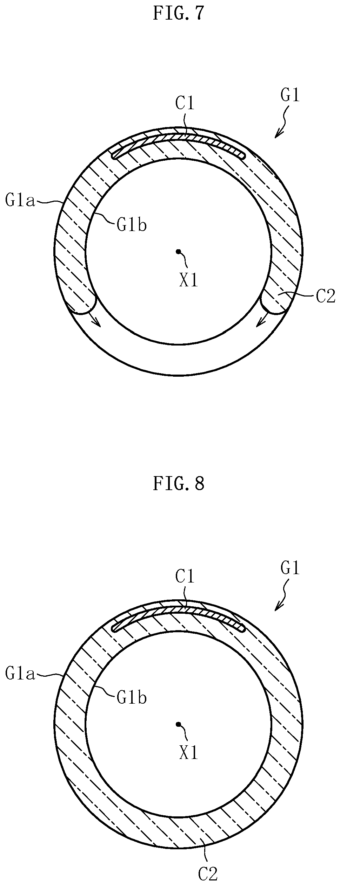

In this case, when the above-mentioned stress is applied to the continuous tube glass G1 by the crack propagation device 21 (tensile force applying portion 29 and bending force applying portion 30), as illustrated in FIG. 6, the crack propagation region C2 starts being enlarged in the directions separated from each other from both the circumferential sides of the inner crack region C1, and after that, as illustrated in FIG. 7, the crack propagation region C2 also continues to be enlarged at the same speed along the circumferential direction. As described above, the cracks continue to propagate (the crack propagation region C2 is enlarged) in a so-called symmetric manner, with the result that the right and left crack propagation regions C2 simultaneously reach a predetermined circumferential position (for example, a position directly facing a circumferential center position of the inner crack region C1 with the center line X1 interposed therebetween in FIG. 8) .

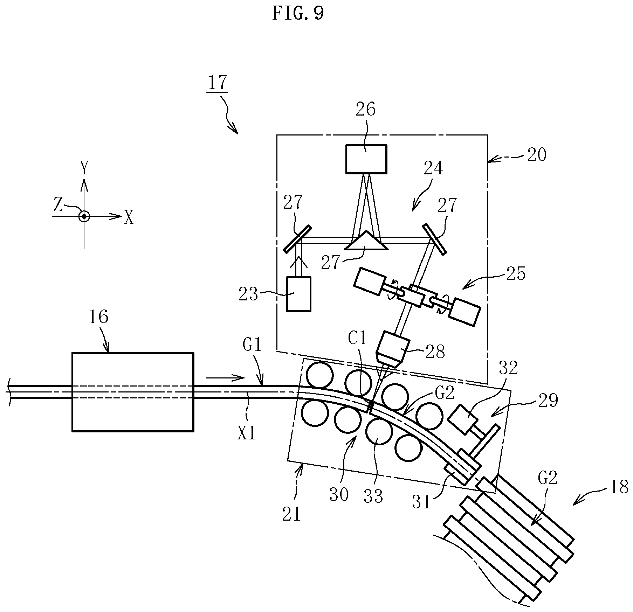

As a result, as illustrated in FIG. 8, the cracks in the inner crack region C1 are caused to propagate throughout the entire circumference and from the outer surface (outer peripheral surface) G1a to an inner surface (inner peripheral surface) G1b of the continuous tube glass G1 so that the continuous tube glass G1 is cut. Further, through the cutting, the tube glass G2 having a predetermined length dimension can be obtained as illustrated in FIG. 9.

Next, the second cutting device 18 performs a re-cutting step (second cutting step) with respect to end portions of the tube glass G2. In the re-cutting step, the tube glass G2 is received from the first cutting device 17 with use of the conveyance device 37, and is sequentially conveyed along a predetermined conveyance direction D1 to the heating device 34, the inner crack region forming device 35, and the cooling device 36. The heating device 34 radiates the laser light L11 to the tube glass G2 having arrived at a position below the heating device 34, to thereby heat the preset cut portion CP at an end portion of the tube glass G2 (heating step) . At this time, the laser light L11 may be radiated while scanning along the conveyance direction of the tube glass G2. With this, the preset cut portion CP can be entirely and evenly heated.

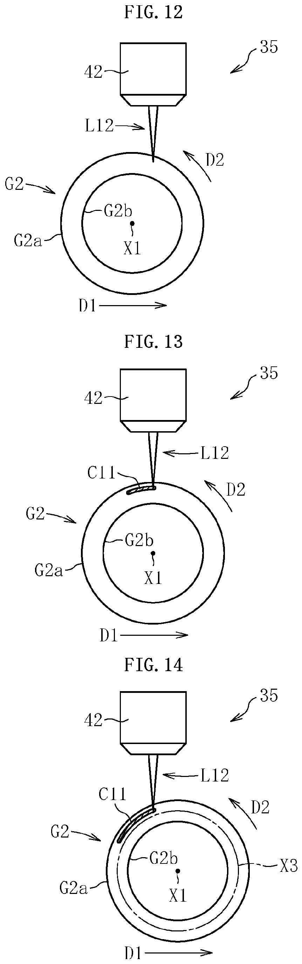

Next, the conveyance device 37 conveys the heated tube glass G2 to the inner crack region forming device 35. As illustrated in FIG. 12 to FIG. 14, the inner crack region forming device 35 radiates the laser light L12 to the inside of the tube glass G2 which passes below the inner crack region forming device 35 while being rotated, to thereby form an inner crack region C11 through multiphoton absorption (inner crack region forming step) . That is, as illustrated in FIG. 12, the inner crack region forming device 35 radiates the laser light L12 having a focal point adjusted to the inside of the end portion (preset cut portion CP) of the tube glass G2 having been conveyed.

The tube glass G2 is conveyed by the conveyance device 37 while being rotated. Therefore, as illustrated in FIG. 13, the tube glass G2 moves relative to the focal point of the laser light L12. With this, the inner crack region C11 is gradually formed along a circumferential direction of the tube glass G2. Finally, as illustrated in FIG. 14, the inner crack region C11 having a predetermined length in the circumferential direction of the tube glass G2 is formed.

The inner crack region C11 is formed in the inside of the preset cut portion CP of the tube glass G2 at a position close to an outer surface G2a of the tube glass G2, that is, at a position on the outer surface G2a side. In other words, as illustrated in FIG. 14, the inner crack region C11 is formed between a center position (see center line X3) in the thickness direction of the tube glass G2 and the outer surface G2a.

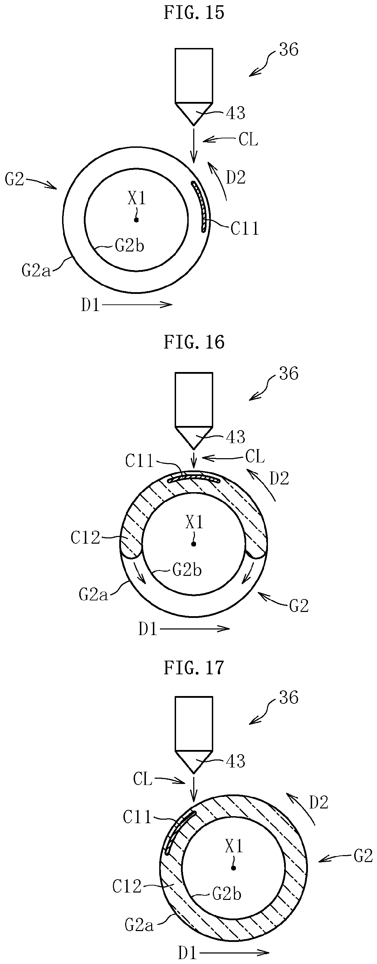

After that, the conveyance device 37 conveys the tube glass G2 from the position below the inner crack region forming device 35 to a position below the cooling device 36. As illustrated in FIG. 15 to FIG. 17, the cooling device 36 jets the cooling medium CL with respect to the tube glass G2 which passes while being rotated (cooling step) . As illustrated in FIG. 16, a crack propagation region C12 expands in the inside of the preset cut portion CP of the tube glass G2 to which the cooling medium CL is jetted. Finally, as illustrated in FIG. 17, the crack propagation region C12 expands throughout the entirety of the inside of the preset cut portion CP, thereby cutting the end portion of the tube glass G2. After both the end portions of the tube glass G2 are cut, the tube glass product G3 having a predetermined length dimension is completed.

According to the first embodiment described above, after the laser light L11 is radiated to the preset cut portion CP of the tube glass G2 by the heating device 34 to heat the preset cut portion CP, the laser light L12 having a focal point adjusted to the inside of the preset cut portion CP is radiated by the inner crack region forming device 35, thereby being capable of forming the inner crack region C11 including one or a plurality of cracks as an origin at the irradiation part of the laser light L12 in the inside of the tube glass G2 through the multiphoton absorption. After that, the preset cut portion CP is cooled by the cooling device 36, thereby causing thermal shock. The thermal shock causes the cracks to propagate throughout the entirety of the inside of the preset cut portion CP, thereby being capable of cutting the end portion of the tube glass G2.

The inner crack region C11 is formed in the inside of the tube glass G2. Therefore, unlike the related art, the tube glass G2 can be cut in a non-contact state without formation of scratches in the outer surface G2a. Thus, the situation in the related art involving generation of glass powder at the time of cutting the tube glass G2 can be reliably prevented. With this, labor of removing glass powder through cleaning may be omitted, thereby being capable of reducing the number of required steps.

Further, when the cut surface is formed as described above, as compared to the case in which cracks are forcibly generated and caused to propagate by cleaving or the like, the occurrence of cracking, chipping, and the like can be prevented to the extent possible to control the properties of the cut surface with relatively high accuracy, with the result that the satisfactory cut surface can be obtained stably. Thus, occurrence of defects caused by cracking and chipping can be prevented, and time required for mouth-burning processing for the end portions of the tube glass G2 can be significantly shortened, thereby being capable of efficiently manufacturing the tube glass product G3.

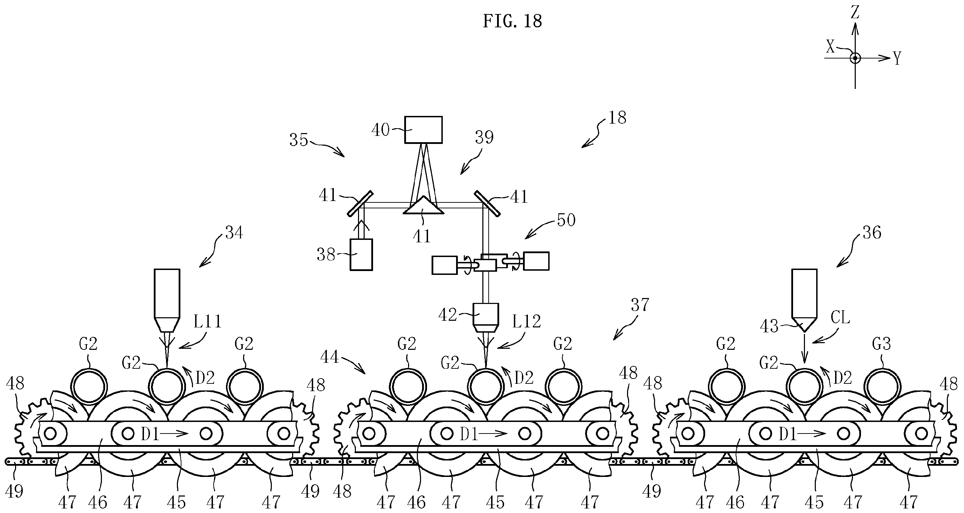

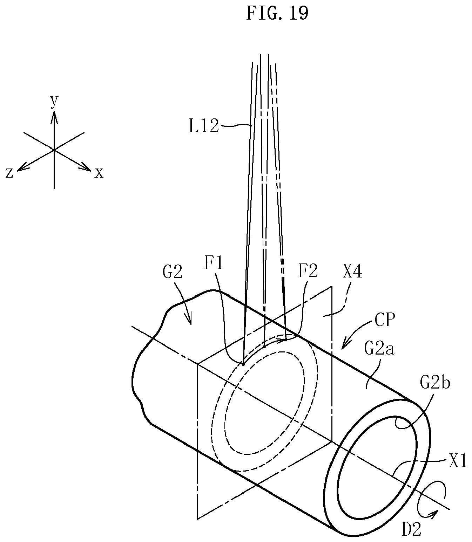

FIG. 18 and FIG. 19 are illustrations of a second embodiment of the present invention. In the second embodiment, a configuration of the inner crack region forming device 35 in the second cutting device 18 is different from that in the first embodiment (FIG. 10 and FIG. 11). As illustrated in FIG. 18, the inner crack region forming device 35 further comprises a scanning portion 50. The scanning portion 50 is arranged on a path of the optical system 39, and is configured to scan the laser light L12 in a predetermined mode. Other configurations in the second embodiment are the same as those in the first embodiment, and common components are denoted by common reference symbols.

The scanning portion 50 has a configuration which is similar to that of the scanning portion 25 of the first cutting device 17 in the first embodiment. That is, the scanning portion 50 is formed of a Galvano mirror, and is constructed so as to cause the laser light L12 reflected from the mirrors 41 to perform scanning in a predetermined locus. As illustrated in FIG. 19, the scanning portion 50 is constructed so as to cause the laser light L12 to perform scanning linearly along the circumferential direction of the tube glass G2 in such a manner that the focal point F (F1, F2) is included in an imaginary cross section X4 orthogonal to a center line X1 of the tube glass G2.

Through adjustment of irradiation conditions (for example, pulse width and output) of the laser light L12, the inner crack region forming device 35 forms the inner crack region C11 including one or a plurality of cracks in a region irradiated with the laser light L12 through the multiphoton absorption of the laser light L12. Further, in this case, the scanning portion 50 causes the laser light L12 to perform scanning in a predetermined locus (for example, a region from the focal point F1 to the focal point F2 in FIG. 19), and the position of the focal point F of the laser light L12 is adjusted to be changed with the passage of time by the focal point adjusting portion 40. With this, the focal point F (F1, F2) is moved along the circumferential direction at a predetermined position of the tube glass G2 in the thickness direction thereof, to thereby form the inner crack region C11 having a predetermined circumferential dimension. In the second embodiment, the laser light L12 can be scanned on a predetermined locus by the scanning portion 50. Therefore, the inner crack region C11 can be formed into an arcuate shape without rotation of the tube glass G2 by the conveyance device 37.

The present invention is not limited to the configurations of the above-mentioned embodiments. In addition, the present invention is not limited to the action and effect described above. Further, the present invention may be modified in various forms within the range not departing from the spirit of the present invention.

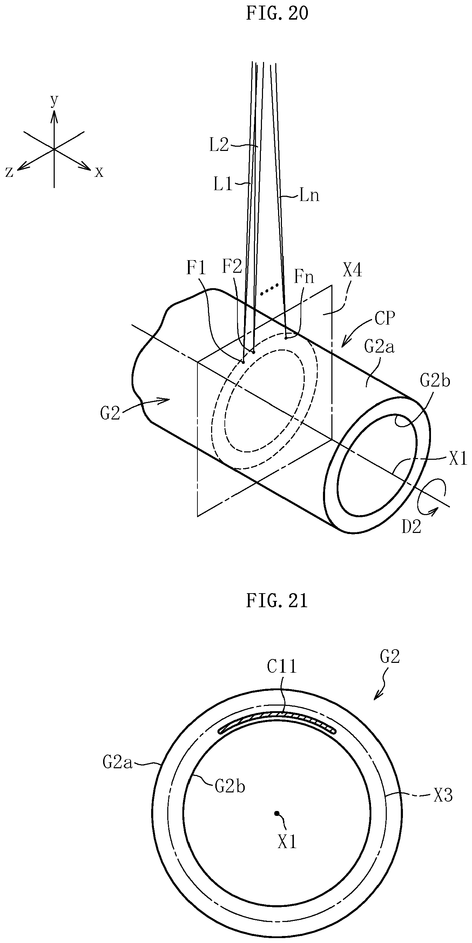

For example, in the above-mentioned second embodiment, there is exemplified the case in which the scanning portion 50 is provided to the inner crack region forming device 35 of the second cutting device 18, and the laser light L12 is radiated to the tube glass G2 while being scanned in the predetermined locus. However, other irradiation modes may also be employed. As illustrated in FIG. 20, in the re-cutting step by the second cutting device 18, the inner crack region C11 having a predetermined size may be formed by simultaneously radiating a plurality of laser lights L1, L2, ......, Ln to the tube glass G2 instead of scanning the laser light L12 in the predetermined locus by the scanning portion 50.

In this case, the focal point adjusting portion 40 comprises a spatial light phase modulator. Therefore, through changes in setting of a phase hologram, positions of the focal points F1, F2, ......, Fn of the laser lights L1, L2, ......, Ln can be adjusted separately and independently. Further, it is also possible to divide one laser light L (L12) into a desired number of lights. Thus, even when one laser oscillator 38 is used, a desired number of laser lights L1, L2, ......, Ln having respective focal points F1, F2, ......, Fn adjusted to predetermined positions in the inside of the tube glass G2 can be simultaneously radiated. The region forming device 20 of the first cutting device 17 may also have the configuration described above.

In the above-mentioned embodiment, description is made of the example in which the end portions of the tube glass G2 are cut in the re-cutting step. However, the present invention is not limited thereto. The halfway portion of the tube glass G2 can be cut in the re-cutting step.

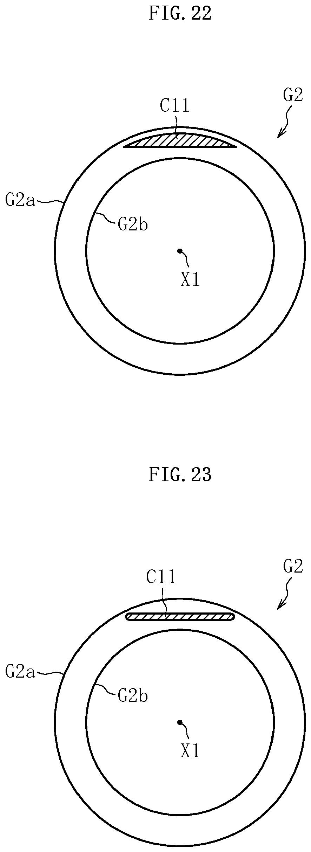

Further, the inner crack region C11 is not limited to that in the above-mentioned embodiments, and may have various shapes . For example, as illustrated in FIG. 21, the inner crack region C11 may be formed on a side closer to an inner surface G2b than the center position (center line X3) of the tube glass G2 in the thickness direction. Further, the inner crack region C11 illustrated in FIG. 22 has a shape in which a part on the outer surface G2a side is substantially arcuate and a part on the inner surface G2b side is linear. Further, as illustrated in FIG. 23, the inner crack region C11 is formed linearly. When the inner crack region C11 is formed linearly, the laser light L12 is radiated to the inside of the tube glass G2 without rotation of the tube glass G2 by the conveyance device 37.

### Reference Signs List

18 second cutting device (cutting device)
34 heating device
35 inner crack region forming device
36 cooling device
37 conveyance device (rotational drive device)
C11 inner crack region
CP preset cut portion
G1 continuous tube glass
G2 tube glass
G3 tube glass product
L12 laser light

## Claims

1. A cutting method for a tube glass, comprising:
a heating step of heating a preset cut portion of the tube glass by radiating laser light to the preset cut portion;
an inner crack region forming step of forming an inner crack region including one or a plurality of cracks through multiphoton absorption that occurs in an irradiation region of laser light by radiating the laser light having a focal point adjusted to an inside of the preset cut portion; and
a cooling step of cooling the preset cut portion, to thereby cause the cracks to propagate in the inside of the preset cut portion.

2. The cutting method for a tube glass according to claim 1, wherein the heating step is performed while rotating the tube glass.

3. The cutting method for a tube glass according to claim 1 or 2, wherein the inner crack region forming step is performed while rotating the tube glass.

4. The cutting method for a tube glass according to any one of claims 1 to 3, wherein the cooling step is performed while rotating the tube glass.

5. The cutting method for a tube glass according to any one of claims 1 to 4, wherein, in the cooling step, the preset cut portion is cooled by a gaseous or mist-like cooling medium.

6. The cutting method for a tube glass according to any one of claims 1 to 5, wherein the laser light used in the inner crack region forming step comprises a pulse laser.

7. A cutting device for a tube glass, comprising:
a heating device configured to heat a preset cut portion of the tube glass by radiating laser light to the preset cut portion;
an inner crack region forming device configured to form an inner crack region including one or a plurality of cracks through multiphoton absorption that occurs in an irradiation region of laser light by radiating the laser light having a focal point adjusted to an inside of the preset cut portion; and
a cooling device configured to cool the preset cut portion, to thereby cause the cracks to propagate in the inside of the preset cut portion.

8. The cutting device for a tube glass according to claim 7, further comprising a rotational drive device which is configured to rotate the tube glass.

9. The cutting device for a tube glass according to claim 7 or 8, wherein the laser light used in the inner crack region forming device comprises a pulse laser.

10. A manufacturing method for a tube glass product, comprising:
a first cutting step of cutting a continuous tube glass formed by tube drawing; and
a second cutting step of cutting an end portion of the tube glass formed after the first cutting step,
the second cutting step comprising:
a heating step of heating a preset cut portion at an end portion of the tube glass by radiating laser light to the preset cut portion;
an inner crack region forming step of forming an inner crack region including one or a plurality of cracks through multiphoton absorption that occurs in an irradiation region of laser light by radiating the laser light having a focal point adjusted to an inside of the preset cut portion; and
a cooling step of cooling the preset cut portion, to thereby cause the cracks to propagate in the inside of the preset cut portion.
